# DEMANDE DE BREVET EUROPEEN

(11) **EP 1 310 714 A1**
(43) Date de publication de la demande: **14.05.2003**
(21) Numéro de dépôt: 01870240.7
(22) Date de dépôt: 09.11.2001
(51) Int. Cl.: F16K 24/04

(54) **Clapet, et en particulier clapet pour desaerateur**

(71) Demandeur: Techspace Aero S.A., 4041 Herstal (BE)
(72) Inventeur: Palladino, Massimo, 4450 Juprelle (BE)
(74) Mandataire: Van Malderen, Joelle

(57) **Abrégé**

La présente invention se rapporte à un clapet (5), en particulier destiné à un désaérateur (4), se présentant essentiellement sous la forme d'un cylindre, perforé d'une ou plusieurs ouverture(s) latérale(s) (52) permettant le passage d'un fluide à vidanger, dont la partie supérieure est obturée par un bouchon (53), de préférence parfaitement étanche, sur ou dans lequel sont disposés des orifices (54) destinés à l'aération, et d'un fond (56) servant d'entrée vers le désaérateur, le clapet étant muni d'une bille (60) qui flotte sur le fluide entrant dans l'ouverture.

## Description

### Objet de l'invention

La présente invention se rapporte à un nouveau type de clapet plus particulièrement destiné à un désaérateur intervenant dans la vidange d'un réservoir vers un autre réservoir.

### Arrière-plan technologique

Les désaérateurs sont des dispositifs bien connus qui permettent de séparer les mélanges gaz-liquide et plus particulièrement air-huile dans toute une série d'applications, en particulier dans le cas d'huile de lubrification récoltée par des pompes de récupération. Le but est bien entendu de fournir à nouveau une huile sinon pure, propre et exempte de bulles d'air, qui puisse être de ce fait réutilisée.

D'autres types d'applications sont les circuits hydrauliques de commande de divers dispositifs comme par exemple les circuits hydrauliques de bâches utilisés en particulier dans les appareils tels que l'Airbus A340.

Dans de telles applications, il est nécessaire de pouvoir vidanger un réservoir vers un autre réservoir. Toutefois, à partir du moment où le premier réservoir est vidé, on risque d'introduire de l'air dans le second réservoir, ce qui est dans certains cas particulièrement catastrophique et doit être évité à tout prix.

Dans ce but, on dispose entre les deux réservoirs des dispositifs désaérateurs éventuellement munis de clapets spécifiques. De tels dispositifs désaérateurs sont constitués d'une cavité essentiellement cylindrique à l'intérieur de laquelle le mélange huile-air est introduit tangentiellement de manière à induire à l'intérieur de ladite cavité un mouvement de rotation grâce auquel l'huile s'accumule le long des parois dans la partie la plus basse tandis que l'air demeure au centre dans la partie la plus haute. Un orifice de sortie d'air est aménagé au centre du dispositif de manière à pouvoir récolter l'air accumulé dans la partie centrale tandis que l'huile est habituellement évacuée par des orifices situés dans le bas de la paroi.

Dans le cas particulier des applications précédemment citées où l'on souhaite effectuer la vidange d'un réservoir vers un autre, il est nécessaire d'empêcher toute intrusion d'air dans le deuxième réservoir.

### Buts de l'invention

La présente invention vise à proposer un dispositif qui permette de résoudre les problèmes de l'état de la technique et en particulier qui permette d'éviter l'introduction d'air dans un réservoir dans lequel on vidange à partir d'un autre réservoir.

La présente invention vise en outre à permettre une solution qui puisse garantir une étanchéité à l'air tout en permettant un écoulement rapide et même très rapide du liquide, par exemple en cas de rupture de canalisation hydraulique.

La présente invention vise de plus à proposer un concept particulièrement simple et facile à implémenter dans tout type d'équipement hydraulique.

### Principaux éléments caractéristiques de l'invention

La présente invention se rapporte à un clapet, en particulier destiné à un désaérateur, se présentant essentiellement sous la forme d'un cylindre perforé d'une ou plusieurs ouverture(s) latérale(s) permettant le passage du fluide à vidanger, dont la partie supérieure est obturée par un bouchon de préférence parfaitement étanche sur ou dans lequel sont disposés des orifices destinés à l'aération, et d'un fond servant d'entrée vers le désaérateur, le clapet étant muni d'une bille qui flotte sur le fluide entrant dans l'ouverture.

Avantageusement, les dimensions de la bille sont telles qu'elle se déplace librement à l'intérieur du clapet mais ne peut en sortir.

Selon une première forme d'exécution, la bille est réalisée en un matériau permettant de résister à des fluides agressifs tel que de l'inox.

Selon une autre forme d'exécution, la bille est réalisée en un matériau plastique ou autre pour l'utilisation avec des fluides non agressifs.

La présente invention se rapporte également à un désaérateur muni d'un clapet selon l'invention.

Enfin, la présente invention se rapporte à l'utilisation du clapet selon l'invention pour la vidange éventuellement rapide ou très rapide d'un premier réservoir vers un second réservoir à l'aide d'un désaérateur.

### Brève description des figures

Les figures 1, 2 et 3 décrivent le principe de la vidange d'un premier réservoir vers un second réservoir par l'intermédiaire d'un désaérateur muni d'un clapet selon l'invention.

La figure 4 représente une vue en détail du clapet du désaérateur représenté aux figures 1 à 3.

### Description de plusieurs formes d'exécution préférées de l'invention

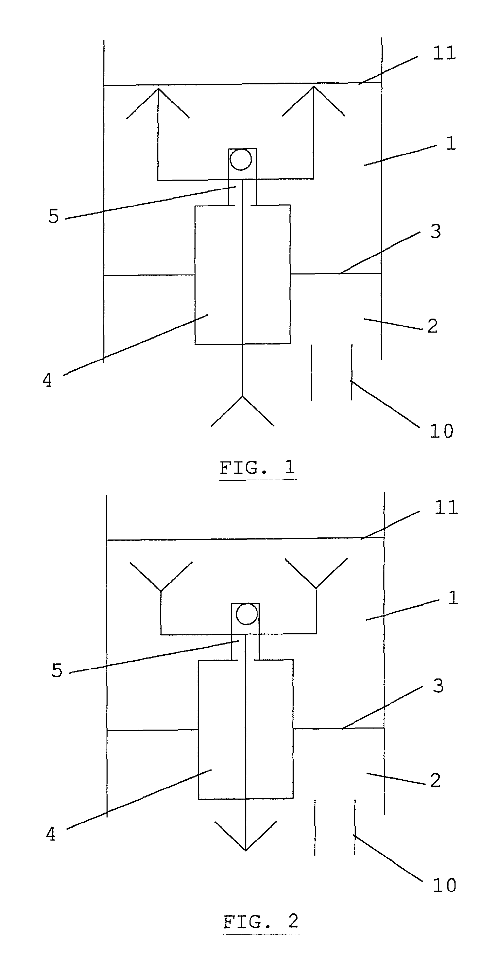

Les figures 1 à 3 décrivent des conditions d'utilisation d'un désaérateur muni d'un clapet selon l'invention. Un désaérateur muni d'un tel clapet peut être utilisé, selon un type d'application préféré, pour la vidange d'un premier réservoir 1 vers un second réservoir 2, les deux réservoirs étant séparés par des baffles 3.

Le transfert du liquide présent dans le réservoir 1 vers le réservoir 2 doit se faire par l'intermédiaire d'un dispositif désaérateur 4 muni d'un clapet d'admission 5. Ce clapet est décrit plus en détails à la figure 4.

La figure 1 illustre le fonctionnement du clapet lors d'une vidange à vitesse relativement lente du réservoir 1 vers le réservoir 2.

Le clapet est réalisé de sorte que le liquide entre dans celui-ci et parvienne par l'intermédiaire du fond vers l'entrée du désaérateur.

De manière classique, le désaérateur permet de séparer le mélange liquide - gaz, par exemple huile - air, essentiellement en induisant une rotation à l'intérieur dudit désaérateur de sorte que le liquide, et en particulier l'huile, s'accumule le long des parois dans la partie inférieure tandis que l'air demeurera au centre et pourra s'échapper par le même clapet. Dans ce but, le clapet sert de vanne de purge.

Le liquide est ensuite aspiré par une porte d'aspiration 10 située dans la partie inférieure du réservoir 2.

La figure 2 illustre le fonctionnement du clapet dans le cas d'une vidange anormalement rapide du réservoir 1 vers le réservoir 2. Cette situation peut se présenter en cas d'accident, comme par exemple une rupture de canalisation en aval du réservoir 2.

Le clapet 5 du désaérateur 4 laisse passer le liquide vers l'entrée du dispositif désaérateur 4 et ensuite vers la porte d'aspiration 10 tout en autorisant également le passage de l'air vers la surface libre représentée par le niveau 11 dans le premier réservoir. En effet, même dans le cas d'une vidange rapide, la bille présente dans le désaérateur reste en position élevée et n'obture pas la sortie du clapet.

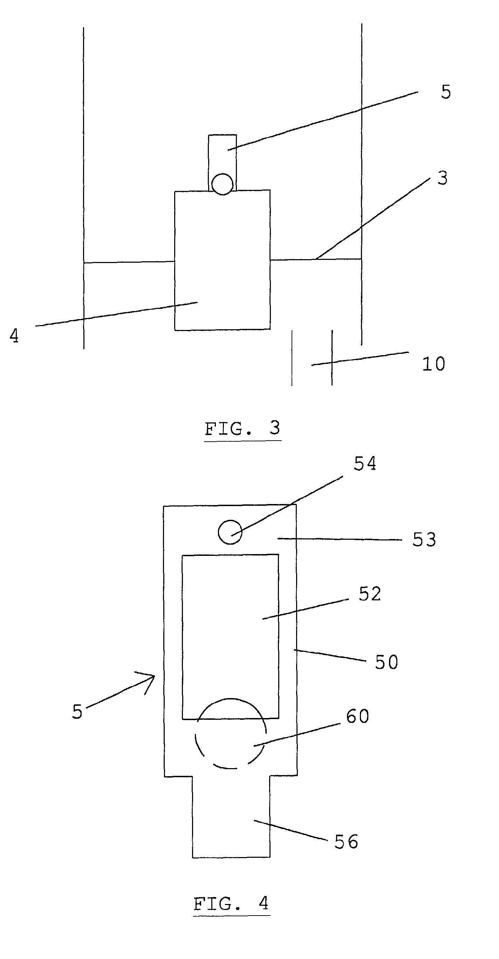

La figure 3 illustre le fonctionnement du clapet dans le cas d'une vidange rapide du réservoir 1 vers le réservoir 2, alors que le niveau de liquide est inférieur au niveau d'entrée du désaérateur.

La bille du clapet flottant sur le liquide va alors se repositionner en position inférieure et fermer ainsi ledit clapet. Ceci évite l'entraînement d'air lors de la vidange du réservoir 1 vers le réservoir 2.

La figure 4 représente en détail le clapet du désaérateur utilisé dans l'invention. Ce clapet se présente essentiellement sous la forme d'un cylindre ou d'un parallélépipède 50 perforé d'une ou plusieurs ouvertures latérales 52 qui permettent le passage du fluide du réservoir 1 à vidanger vers le réservoir 2. La partie supérieure dudit cylindre ou parallélépipède 50 est obturée par un bouchon 53 parfaitement étanche.

Afin de favoriser encore le dégazage et donc l'évacuation de poches d'air emprisonné dans ledit bouchon, il est prévu de petits orifices 54 dans ce dit bouchon.

Le fond 56 du clapet est directement fixé sur le dispositif désaérateur et est à cet effet muni de moyens appropriés tels qu'un pas de vis qui permettra de fixer le clapet sur ledit désaérateur.

Enfin, selon une caractéristique particulièrement importante, le clapet est muni d'une bille 60 qui est apte à flotter sur le fluide entrant par ses diverses ouvertures. Les dimensions de cette bille sont telles que la bille doit pouvoir se déplacer librement à l'intérieur du clapet avec le niveau du fluide, ne pas pouvoir sortir du clapet et pouvoir obturer parfaitement l'entrée du dispositif désaérateur, se présentant sous forme d'une ouverture circulaire.

De manière particulièrement avantageuse, cette bille sera réalisée dans un matériau léger et pouvant résister à des fluides agressifs tels que de l'inox. Selon cette forme d'exécution, elle peut être tout simplement réalisée en accolant ou solidarisant deux demi-coques en inox que l'on polira ensuite.

Selon une autre forme d'exécution, cette bille peut être réalisée en un matériau plastique suffisamment résistant au fluide utilisé.

La présence d'un tel bouchon 53 permet de réduire la traînée de fluide sur la bille lors de la vidange, ce qui ne serait pas le cas avec un autre dispositif tel qu'une grille par exemple.

## Revendications

1. Clapet (5), en particulier destiné à un désaérateur (4), se présentant essentiellement sous la forme d'un cylindre, perforé d'une ou plusieurs ouverture(s) latérale(s) (52) permettant le passage d'un fluide à vidanger, dont la partie supérieure est obturée par un bouchon (53), de préférence parfaitement étanche, sur ou dans lequel sont disposés des orifices (54) destinés à l'aération, et d'un fond (56) servant d'entrée vers le désaérateur, le clapet étant muni d'une bille (60) qui flotte sur le fluide entrant dans l'ouverture.

2. Clapet selon la revendication 1, **caractérisé en ce que** les dimensions de la bille sont telles qu'elle se déplace librement à l'intérieur du clapet mais ne peut en sortir.

3. Clapet selon la revendication 1 ou 2, **caractérisé en ce que** la bille est légère et de préférence creuse, et est réalisée en un matériau permettant de résister à des fluides agressifs tel que de l'inox.

4. Clapet selon la revendication 1 ou 2, **caractérisé en ce que** la bille est légère et est réalisée en un matériau plastique ou autre pour l'utilisation avec des fluides non agressifs.

5. Désaérateur muni d'un clapet selon l'une quelconque des revendications précédentes.

6. Utilisation du clapet selon l'une quelconque des revendications 1 à 5 pour la vidange éventuellement rapide ou très rapide d'un premier réservoir vers un second réservoir à l'aide d'un désaérateur.
